# EUROPEAN PATENT SPECIFICATION

(11) **EP 3 254 155 B1**
(45) Date of publication and mention of the grant of the patent: **30.12.2020**
(21) Application number: 16758475.4
(22) Date of filing: 02.03.2016
(51) Int. Cl.: H04B 10/2507, H04B 10/50, H04B 10/61, G02B 6/27

(54) **POLARIZATION STATE ALIGNER (PSA)**
POLARISATIONSSTATUSAUSRICHTER (PSA)
DISPOSITIF D'ALIGNEMENT À L'ÉTAT DE POLARISATION (PSA)

(30) Priority: 02.03.2015 US 201562127057 P; 01.03.2016 US 201615057379
(43) Date of publication of application: 13.12.2017
(73) Proprietor: Huawei Technologies Co. Ltd., Shenzhen, Guangdong 518129 (CN)
(72) Inventor: WEN, Yangjing, Cupertino, California 95014 (US); ZHU, Fei, Coral Gables, Florida 33156 (US); BAI, Yusheng, Los Altos Hills, California 94024 (US)
(74) Representative: Goddar, Heinz J.
(86) International application number: PCT/CN2016/075335
(87) International publication number: WO 2016/138860

(56) References cited:
- WO-A1-2014/020669
- WO-A1-2015/176311
- CN-A- 102 333 059
- CN-A- 103 635 853
- CN-A- 103 959 144
- JP-A- 2011 064 657
- US-A1- 2003 031 399
- US-A1- 2004 008 916
- US-A1- 2013 148 985
- US-A1- 2014 286 651
- US-A1- 2014 376 929
- NAPASAB V ET AL: "New polarization-state control scheme: Polarization recombining", OPTICS COMMUNICATIONS, ELSEVIER, AMSTERDAM, NL, vol. 66, no. 2-3, 15 April 1988 (1988-04-15), pages 83-87, XP024424060, ISSN: 0030-4018, DOI: 10.1016/0030-4018(88)90038-7 [retrieved on 1988-04-15]
- NAPASAB V ET AL: "Endless all-fibre linear polarisation phase shifter", JOURNAL OF PHYSICS E. SCIENTIFIC INSTRUMENTS, IOP PUBLISHING, BRISTOL, GB, vol. 21, no. 10, 1 October 1988 (1988-10-01), pages 974-977, XP020018644, ISSN: 0022-3735, DOI: 10.1088/0022-3735/21/10/014
- NAPASAB V ET AL: "POLARIZATION RECOMBINING: A NEW AUTOMATIC POLARIZATION CONTROL SCHEME FOR HETERODYNE OR HOMODYNE OPTICAL RECEIVERS", JOURNAL OF OPTICAL COMMUNICATIONS, FACHVERLAG SCHIELE & SCHON, BERLIN, DE, vol. 9, no. 9, 1 September 1988 (1988-09-01), pages 102-107, XP000000862, ISSN: 0173-4911

## Description

### BACKGROUND

Optical fibers are widely used for providing communications links. Communications links employing optical fibers provide many advantages compared to communications links employing electrical media. Those advantages include larger bandwidth, higher noise immunity, reduced power dissipation, and reduced crosstalk. The rapid growth of optical communications links and the need for greater capacity has led research and industry to employ more advanced and higher-order modulation schemes.
Napasab, V. et al.: "New Polarization-State Control Scheme: Polarization Recombining." Optics Communications, Elsevier, Amsterdam, NL, vol. 66, no. 2-3, 15 April 1988, pages 83-87 discloses an automated polarization-state control scheme consisting of a polarization beam splitter, a 90°-linear polarization rotator, an endless phaseshifter and a beam combiner.
Napasab, V. et al.: "Endless all-fibre linear polarization phase shifter", Journal of Physics E. Scientific Instruments, IOP Publishing, Bristol, GB, vol. 21, no. 10, 1 October 1988, pages 974-977 discloses a technique for continuous phase shifting of a linearly polarised light wave which is based on a simple polarisation rotating scheme. Using two rotatable and one fixed fibre cranks as phase plates arranged in cascade, an endless all-fibre linear polarisation phase shifter can be constructed. This device also operates as a linear polarisation rotator.
US 2014/376929 A1 discloses an optical receiver comprising a package provided with an input window; a polarization-maintaining optical fiber fixable to the input window; a polarization beam splitter, disposed on the package, for inputting light outputted from the polarization-maintaining optical fiber and outputting first output light and second output light having respective polarization directions different from each other; a beam splitter, disposed on the package, for splitting the first output light; a first light-receiving element, optically coupled to the beam splitter, having two light-receiving parts corresponding to two kinds of the output light split by the beam splitter; and a second light-receiving element, disposed on the package, for receiving the second output light.
US 2014/286651 A1 discloses an optical receiver for coherent optical communication, including a splitting element that splits a signal light into two optical axes; optical hybrids each of which is coupled with the two split optical axes; a skew adjustment element that is arranged on one of the optical axes, and adjusts a difference between optical path lengths of the two optical axes between the splitting element and the optical hybrids; a carrier; an adhesive that is filled between the skew adjustment element and the carrier; and a void that is located at an end portion of an optical axis direction of the skew adjustment element in a region where the skew adjustment element and the carrier are opposed to each other, the void being not filled up with the adhesive.

### SUMMARY

The present invention provides a system of claim 1 and a method of claim 7. Possible implementation manners are disclosed in the dependent claims.
In the following, embodiments not falling under the scope of the claims do not form part of the invention which is defined by the claims. In one embodiment, the disclosure includes a system comprising: a polarization state aligner (PSA) comprising: an input port; a first polarization beam splitter (PBS) coupled to the input port; a first phase shifter (PS) coupled to the first PBS; a first polarization rotator (PR) coupled to the first PBS; a first beam splitter (BS) coupled to the first PS and the first PR; a first output port coupled to the first BS; and a second output port coupled to the first BS. In some embodiments, the system further comprises: a receiver coupled to the PSA and comprising: a second PBS; a first 90 degree (°) hybrid mixer coupled to the second PBS and the first output port; first photodiodes (PDs) coupled to the first 90° hybrid mixer; first transimpedance amplifiers (TIAs) coupled to the first PDs; and a digital signal processor (DSP) coupled to the first TIAs; the system further comprises: a second PR coupled to the second PBS; a second 90° hybrid mixer coupled to the second PR and the BS; second PDs coupled to the second 90° hybrid mixer; and second TIAs coupled to the second PDs and the DSP; the system further comprises: a modulator system coupled to the PSA and comprising: an in-phase (I) modulator coupled to the first output port; a quadrature phase (Q) modulator coupled to the second output port; a second PS coupled to the Q modulator; and a beam combiner (BC) coupled to the I modulator and the second PS; the I modulator and the Q modulator comprise Mach-Zehnder modulators (MZMs); the system further comprises: a modulator system coupled to the PSA and comprising: an X component (X) modulator coupled to the first output port; a Y component (Y) modulator coupled to the second output port; a second PR coupled to the Y modulator; and a polarization beam combiner (PBC) coupled to the X modulator and the second PR; the X modulator and the Y modulator are any combination of Mach-Zehnder modulators (MZMs), electro-absorption (EA) modulators, or in-phase and quadrature phase (IQ) modulators; the system further comprises: a modulator system coupled to the PSA and comprising: a second BS coupled to the first output port; a first modulator coupled to the second BS; a second modulator coupled to the second BS; a third BS coupled to the second output port; a third modulator coupled to the third BS; and a fourth modulator coupled to the third BS; the system further comprises: a substrate, wherein the PSA and the modulator system are integrated on the substrate; the system further comprises: a waveguide medium coupling the first PBS to the input port, the first PS to the first PBS, the first PR to the first PBS, the first BS to the first PS and the first PR, the first output port to the first BS, and the second output port to the first BS; the waveguide medium comprises air; the waveguide medium comprises one of silicon (Si), silicon dioxide (SiO₂), or indium phosphide (InP).

In another embodiment, the disclosure includes a system comprising: a polarization state aligner (PSA) configured to: receive an input light from an optical component at an input polarization; split the input light into a first light and a second light, wherein the first light comprises an output polarization corresponding to an optoelectronic circuit, and wherein the second light comprises a first polarization; rotate the first polarization to the output polarization; combine the first light and the second light; and provide to the optoelectronic circuit a first output light associated with the first light and a second output light associated with the second light; wherein the first output light and the second output light comprise the output polarization; In some embodiments, the input polarization is any arbitrary polarization, the output polarization is a transverse electric (TE) polarization, and the first polarization is a transverse magnetic (TM) polarization; the PSA comprises: a polarization beam splitter (PBS) configured to: receive the input light; and split the input light into the first light and the second light; a polarization rotator (PR) coupled to the PBS and configured to rotate the first polarization to the output polarization; and a phase shifter (PS) coupled to the PBS and configured to shift a first phase of the first light to a second phase so that a phase delay between the first light and the second light is an integer multiple of π; the PSA comprises: a polarization splitter-rotator (PSR) configured to: receive the input light; split the input light into the first light and the second light; and rotate the first polarization to the output polarization; and a phase shifter (PS) coupled to the PSR and configured to shift a first phase of the second light to a second phase so that a phase delay between the first light and the second light is an integer multiple of π; the optical component is a standard single-mode fiber (SSMF) that does not maintain polarization.

In yet another embodiment, the disclosure includes a method comprising: receiving an input light from an optical component at an input polarization; splitting the input light into a first light and a second light, wherein the first light comprises an output polarization corresponding to an optoelectronic circuit, and wherein the second light comprises a first polarization; rotating the first polarization to the output polarization; shifting a phase of the first light, the second light, or both so that a phase delay between the first light and the second light equalizes a first power of a first output light to a second power of a second output light; combining the first light and the second light; and providing to the optoelectronic circuit the first output light and the second output light, wherein the first output light is associated with the first light and the second output light is associated with the second light; wherein the first output light and the second output light comprise the output polarization. In some embodiments, the method further comprises: providing to a coherent receiver the first output light as a first local oscillator (LO) optical signal; and providing to the coherent receiver the second output light as a second LO optical signal; the method further comprises: providing to a modulator system the first output light as a first continuous wave (CW) light; and providing to the modulator system the second output light as a second CW light.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of a PSA according to an embodiment of the disclosure.
FIG. 2 is a graph of output as a function of phase delay for various values of a relative angle for the PSA in FIG. 1.
FIG. 3 is a schematic diagram of an integrated PSA according to an embodiment of the disclosure.
FIG. 4 is a schematic diagram of a dual-polarization coherent receiver system according to an embodiment of the disclosure.
FIG. 5 is a schematic diagram of an IQ transmitter system according to an embodiment of the disclosure.
FIG. 6 is a schematic diagram of a dual-polarization transmitter system according to an embodiment of the disclosure.
FIG. 7 is a schematic diagram of a parallel, single-mode, four-lane (PSM4) transmitter system according to an embodiment of the disclosure.
FIG. 8 is a flowchart illustrating a method of polarization state alignment according to an embodiment of the disclosure.
FIG. 9 is a schematic diagram of a device.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

High-speed optical transceivers are key components in optical communications systems. Systems that combine advanced modulation formats such as higher-order quadrature amplitude modulation (QAM) with coherent detection have shown high performance and high capacity. In this context, coherent detection refers to the detection of both amplitude information and phase information in order to recover a signal.

Such advanced modulation formats are implemented in both a transmitter and a receiver. In the transmitter, a modulator such as an in-phase and quadrature phase (IQ) modulator modulates data onto a continuous wave (CW) light to produce a modulated optical signal. Such modulation is polarization dependent, so a CW laser and the modulator need to have matching polarizations. In the receiver, an integrated coherent receiver (ICR) receives the modulated optical signal and a local oscillator (LO) optical signal, wherein the LO optical signal beats with the modulated optical signal in order for the ICR to recover phase information. Such recovery is polarization dependent, so the LO optical signal and the ICR need to have matching polarizations. Thus, both the transmitter and the receiver need polarization alignment between their respective components.

Bouda, et al., "Implementation Agreement for Integrated Polarization Multiplexed Quadrature Modulated Transmitters," Optical Internetworking Forum, August 27, 2013 ("Bouda"), employs polarization-maintaining fiber (PMF) to connect a CW laser to a modulator. Similarly, Johnson, et al., "Implementation Agreement for Integrated Dual Polarization Intradyne Coherent Receivers," Optical Internetworking Forum, November 14, 2013 ("Johnson"), employs a PMF to connect a LO optical signal source to a coherent receiver. PMF is much more costly than standard single-mode fiber (SSMF) and other fibers that are not polarization maintaining. In prior approaches, where the CW laser is relatively close to the modulator in the transmitter and where the LO source is relatively close to the coherent receiver in the receiver, the extra cost of PMF may not be an issue since the fiber length is relatively short. However, in other applications where the fiber length is longer, the extra cost of PMF may be an issue. There is therefore a need to match polarizations in transmitters and receivers, but without the use of PMFs.

Disclosed herein are embodiments for PSAs. The PSAs receive light beams or signals from fibers or other optical components, adjust the polarizations of the light beams or signals to desired polarizations of optoelectronic circuits, and pass the light beams or signals to the optoelectronic circuits. The optoelectronic circuits comprise IQ modulators, ICRs, or other components. The PSAs address the polarization dependence of those components. Because the PSAs adjust the polarizations of the lights to desired polarizations, the PSAs allow for use of SSMFs and other fibers, which are not polarization maintaining, instead of PMFs. The PSAs reduce cost, particularly when longer fibers are needed to couple components. For a data center transmitter application, multiple laser sources may be in an end of row (EoR) switch, and modulators corresponding to the laser sources may be relatively far away in a top of rack (ToR) switch and coupled to the laser sources via SSMFs. For a fronthaul transmitter application, multiple laser sources may be in a base band unit (BBU), and modulators corresponding to the laser sources may be relatively far away in a remote radio unit (RRU) and coupled to the laser sources via SSMFs. Similarly, for a receiver system application, a LO optical signal source may be relatively far away and coupled to a coherent receiver via a SSMF. In this context, relatively far away may mean at least a few meters (m) and up to tens of kilometers (km). Though the PSAs reduce costs for short-haul applications in particular, the PSAs may also be used in metro applications.

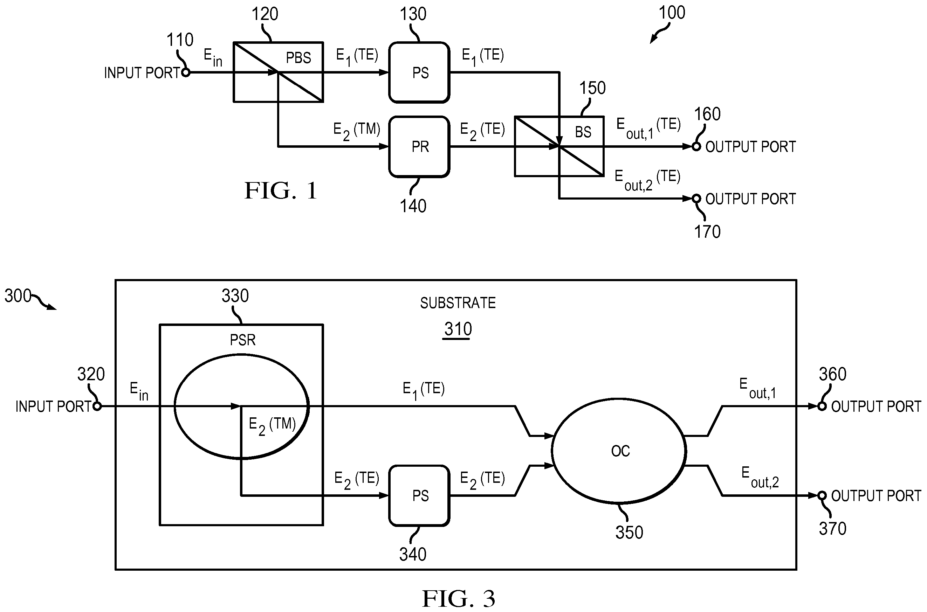

FIG. 1 is a schematic diagram of a PSA 100 according to an embodiment of the disclosure. The PSA 100 comprises an input port 110, a polarization beam splitter (PBS) 120, a phase shifter (PS) 130, a polarization rotator (PR) 140, a beam splitter (BS) 150, an output port 160, and an output port 170. The lines connecting those components represent light beams or signals. The light beams or signals are labeled as variants of the letter "E," which indicates an optical field in root square watts (W^{1/2}). In addition, the light beams or signals are labeled with their polarizations at various points. The polarizations include transverse electric (TE) and transverse magnetic (TM). Though not shown, the light travels through air in a free-space optics application or through an optical waveguide medium comprising silicon (Si), silicon dioxide (SiO₂), indium phosphide (InP), or other suitable material in a waveguide application. Though the PS 130 is shown in a top branch of the PSA 100, the PS 130 may instead be in a bottom branch of the PSA 100 or be in both the top branch and the bottom branch of the PSA 100.

In operation, an input light Eᵢₙ enters the PSA 100 through the input port 110. Eᵢₙ may enter from an SSMF and therefore have any arbitrary polarization. Eᵢₙ passes from the input port 110 to the PBS 120. The PBS 120 splits Eᵢₙ into a first light E₁ with a TE polarization and a second light E₂ with a TM polarization. The PBS 120 then passes E₁ to the PS 130 and E₂ to the PR 140. The PS 130 performs a phase shift of E₁ as described below and passes E₁ to the BS 150. After the phase shift of E₁, the difference in phase between E₁ and E₂ is referred to as a phase delay. The PR 140 rotates E₂ 90 degrees (°) so that E₂ has a TE polarization, and the PR 140 passes E₂ to the BS 150. Finally, the BS 150 receives both E₁ and E₂, combines E₁ and E₂, and passes E_{out,1} to the output port 160 and E_{out,2} to the output port 170. When the phase shift is a particular value, then E₁ and E₂ have the same power. In addition, E₁ and E₂ have the same TE polarization, which may be the desired polarization of a subsequent optoelectronic circuit. Thus, for whatever arbitrary polarization Eᵢₙ has, E_{out,1} and E_{out,2} have the same TE polarization and have the same power.

When E₁ and E₂ enter the BS 150, they may be expressed as follows: ${E}_{1} = {E}_{0} {e}^{j \left[ωt+φ\left(t\right)\right]} cos θ$ (1) ${E}_{2} = {E}_{0} {e}^{j \left[ω\left(t-τ\right)+φ\left(t\right)+Δϕ\right]} sin θ$ (2) where E₁ is an optical field of a light entering the BS 150 from the top branch of the PSA 100, E₀ is an amplitude of an optical field of Eᵢₙ, *e* is an exponential function, *j* is an imaginary number, *ω* is an optical carrier frequency in units of hertz (Hz), *t* is time in units of second (s), *ϕ* is an optical phase that may include phase noise and is in units of radians, *θ* is a relative angle between a polarization of Eᵢₙ and a TE polarization of the PBS 120 and is in units of degrees (°), E₂ is an optical field of the light entering the BS 150 from the bottom branch of the PSA 100, *τ* is a time delay between E₁ and E₂ and is in units of seconds (s), and Δ*φ* is a phase delay introduced between E₁ and E₂ and is in units of radians. E_{out,1} and E_{out,2} are expressed as follows: $\begin{matrix}{E}_{out , 1} & = \frac{1}{\sqrt{2}} {E}_{1} + \frac{1}{\sqrt{2}} {E}_{2} {e}^{jπ / 2} \\ {E}_{out , 1} & = \frac{1}{\sqrt{2}} {E}_{0} \sqrt{1 - sin \left(-ωτ+Δϕ\right) sin 2 θ} {e}^{j \left[ωt+φ\left(t\right)\right] + {jΦ}_{1}}\end{matrix}$ (3) $\begin{matrix}{E}_{out , 2} & = \frac{1}{\sqrt{2}} {E}_{1} {e}^{jπ / 2} + \frac{1}{\sqrt{2}} {E}_{2} \\ {E}_{out , 2} & = \frac{1}{\sqrt{2}} {E}_{0} \sqrt{1 + sin \left(-ωτ+Δϕ\right) sin 2 θ} {e}^{j \left[ωt+φ\left(t\right)\right] + jπ / 2 + {jΦ}_{2}}\end{matrix}$ (4) *Φ₁* and *Φ₂*, which are the phase in units of radians of E_{out,1} and E_{out,2}, respectively, are expressed as follows: ${Φ}_{1} = arctan \left(\frac{cos \left(-ωτ+Δϕ\right) sin θ}{cos θ - sin \left(-ωτ+Δϕ\right) sin θ}\right)$ ${Φ}_{2} = arctan \left(\frac{cos \left(-ωτ+Δϕ\right) sin θ}{cos θ + sin \left(-ωτ+Δϕ\right) sin θ}\right)$

The powers in units of watts (W) of E₁ and E₂ are respectively as follows: $\begin{matrix}{P}_{out , 1} & = {\left|{E}_{out , 1}\right|}^{2} \\ {P}_{out , 1} & = \frac{1}{2} {\left|{E}_{0}\right|}^{2} \left(1-sin\left(-ωτ+Δϕ\right) sin 2θ\right) \\ {P}_{out , 1} & = \frac{1}{2} {P}_{0} \left[1-sin\left(Δφ\right) sin 2θ\right]\end{matrix}$ (5) $\begin{matrix}{P}_{out , 2} & = {\left|{E}_{out , 2}\right|}^{2} \\ {P}_{out , 2} & = \frac{1}{2} {\left|{E}_{0}\right|}^{2} \left(1+sin\left(-ωτ+Δϕ\right) sin 2θ\right) \\ {P}_{out , 2} & = \frac{1}{2} {P}_{0} \left[1+sin\left(Δφ\right) sin 2θ\right] ,\end{matrix}$ (6) where Δ*ϕ* = *-ωτ* + Δ*φ* is a total phase delay between E₁ and E₂ and P₀ is the power of Eᵢₙ in units of watts. Equations (5) and (6) show that, if Δ*ϕ* = *kπ*, where *k* is an integer, then the dependence of P₁ and P₂ on *θ* can be eliminated so that P₁ and P₂ are both equal to P₀/2.

A processor, which is described below, performs the calculations and instructs the PS 130 to perform the phase shift of E₁ based on the calculations. The PS 130 may be a heater or phase modulator. If the PS 130 is a heater, then the PS 130 provides a heat based on instructions from the processor. If the PS 130 is a phase modulator, then the PS 130 provides a voltage or current based on the instructions from the processor.

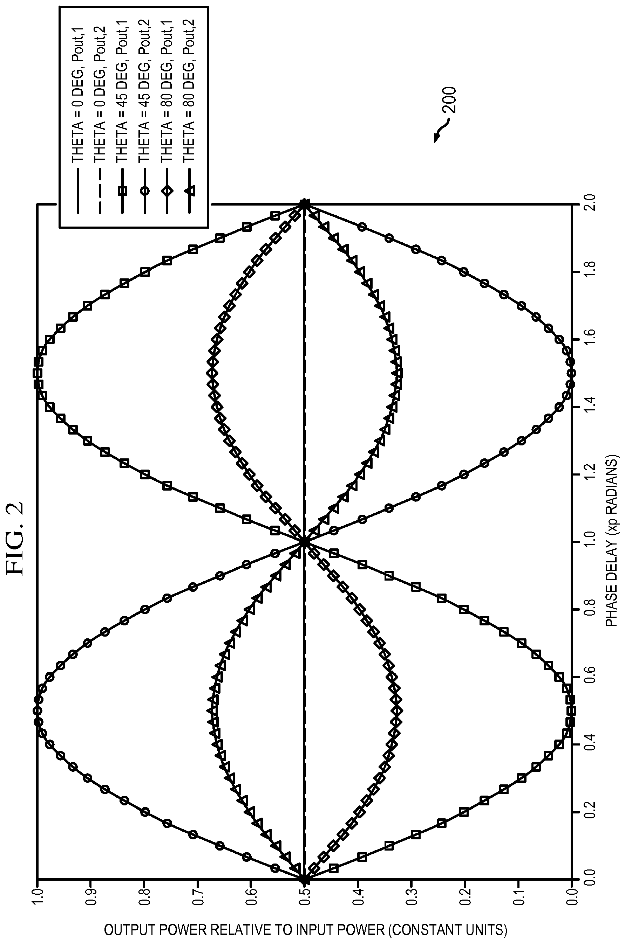

FIG. 2 is a graph 200 of output as a function of phase delay for various values of a relative angle for the PSA 100 in FIG. 1. The x-axis represents the phase delay Δϕ in *xπ* radians, where *x* is between 0 and 2. For instance, the value 1 indicates that the phase delay Δ*ϕ* is 1*π* radians. The y-axis represents output power relative to input power in arbitrary or constant units. For instance, the value 0.5 indicates that P_{out,1} is half of P₀. The relative angle is *θ*, and its various values are 0°, 45°, and 80°. For all of the values of θ, the relative powers of P₁ and P₂ vary with Δ*ϕ* and have a complementary relationship. As can be seen, when Δ*ϕ* in 1*π* radians and 2*π* radians, the relative powers of P₁ and P₂ are both 0.5. In other words, P₁ and P₂ are half of P₀. As mentioned above, the same is true when Δ*ϕ* is any *k* multiple of *π*. For relative angles *θ* = *Nπ*/2, where *N* is an integer, P₁ and P₂ have equal power regardless of Δ*ϕ.*

The time delay τ can be designed to be zero to reduce wavelength dependence. However, fabrication may introduce some variation in *τ* so that *τ* is not zero. For a typical single wavelength operation, *ωτ* is a single value, but the optical carrier frequency *ω* may vary due to a wavelength drift. The wavelength drift may be ±6.5 nanometers (nm) for an uncooled coarse wavelength-division multiplexing (CWDM) laser, but the wavelength drift is typically relatively slow. Thus, the wavelength drift can be tracked, and the wavelength drift can be compensated for by adjusting the phase delay Δ*φ*. When the wavelength drift is relatively fast, a free spectral range (FSR) of 100 gigahertz (GHz) for delay tolerance provides for tracking and compensation of wavelength drift. An FSR of 100 GHz corresponds to a time delay *τ* of 10 picoseconds (ps), so the length difference, or tolerance, between the top branch of the PSA 100 and the bottom branch of the PSA 100 is about 0.75 millimeters (mm) for a silicon waveguide with a refractive index of about 4. That tolerance is realistic for available fabrication techniques.

Equations (3) and (4) show that, if *-ωτ* + Δ*φ* = *kπ,* then *Φ₁* and *Φ₂* are both equal to *θ*. The variations of *Φ₁* and *Φ₂* are therefore slow. Thus, the variations of *Φ₁* and *Φ₂* may be tracked and compensated for.

FIG. 3 is a schematic diagram of an integrated PSA 300 according to an embodiment of the disclosure. The PSA 300 comprises a substrate 310, an input port 320, a polarization splitter-rotator (PSR) 330, a PS 340, an optical coupler (OC) 350, an output port 360, and an output port 370. The PSA 300 is referred to as an integrated PSA because, unlike for the PSA 100, the components of the PSA 300 are integrated into or onto the substrate 310 during fabrication. The substrate 310 comprises silicon. Light travels through a silicon-based optical waveguide.

In operation, Eᵢₙ enters the PSA 100 through the input port 320. Eᵢₙ may enter from an SSMF and therefore have any arbitrary polarization. Eᵢₙ passes from the input port 320 to the PSR 330. The PSR 330 splits Eᵢₙ into a first light E₁ with a TE polarization and a second light E₂ with a TM polarization. The PSR 330 then passes E₁ to the OC 350. In addition, the PSR 330 rotates E₂ 90° so that E₂ has a TE polarization, and the PSR 330 passes E₂ to the PS 340. The PS 340 performs a phase shift of E₂ as described above and passes E₂ to the OC 350. After the phase shift of E₁, the difference in phase between E₁ and E₂ is referred to as a phase delay. Finally, the OC 350 receives both E₁ and E₂, combines E₁ and E₂, and passes E_{out,1} to the output port 360 and E_{out,2} to the output port 370. When the phase shift is a particular value, then E₁ and E₂ have the same power. In addition, E₁ and E₂ have the same TE polarization, which may be the desired polarization of a subsequent optoelectronic circuit. Thus, for whatever arbitrary polarization Eᵢₙ has, E_{out,1} and E_{out,2} have the same TE polarization and have the same power. Equations (1)-(6) apply to E₁, E₂, E_{out,1}, and E_{out,2} in the PSA 300 as they do to the PSA 100 in FIG. 1, except the light paths are reversed. For instance, equation (1) applies to E₂ and equation (2) applies to E₁.

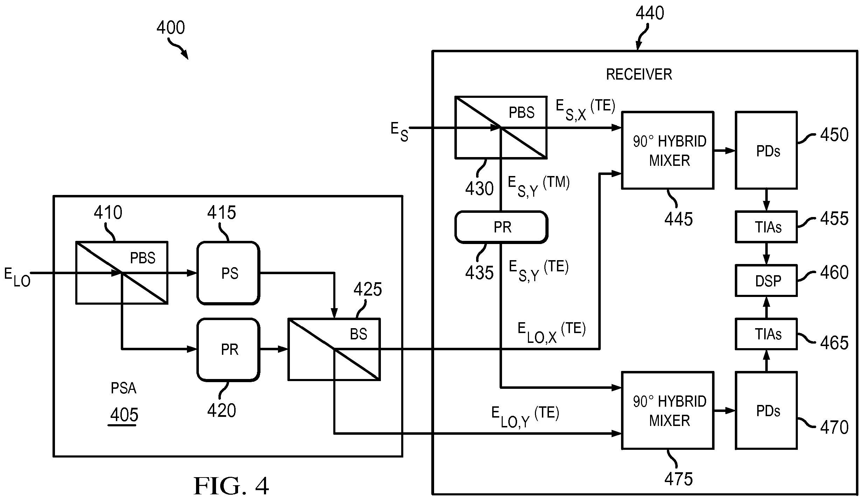

FIG. 4 is a schematic diagram of a dual-polarization coherent receiver system 400 according to an embodiment of the disclosure. The system 400 generally comprises a PSA 405, which is similar to the PSA 100, and a receiver 440. Thus, the system 400 provides one implementation of the PSA 100. The PSA 405 may replace a PBS in other dual-polarization coherent receiver systems. The PSA 405 and the receiver 440 may be integrated on a silicon substrate.

The PSA 405 comprises a PBS 410, a PS 415, a PR 420, and a BS 425 that are similar to the PBS 120, the PS 130, the PR 140, and the BS 150, respectively, in the PSA 100. The receiver 440 is a dual-polarization coherent receiver and comprises a PBS 430, a PR 435, a 90° hybrid mixer 445, photodiodes (PDs) 450, transimpedance amplifiers (TIAs) 455, a digital signal processor (DSP) 460, a 90° hybrid mixer 475, PDs 470, and TIAs 465. Though the PDs 450, 470 and the TIAs 455, 465 are shown as single components, they may represent four or any suitable number of PDs or TIAs.

In operation, the PSA 405 receives an LO optical signal E_{LO} from an LO optical signal source, which may be relatively far away from the system 400 in a transmitter. If the LO optical signal source is coupled to the system 400 via an SSMF, then the polarization of the E_{LO} may vary with time. Nonetheless, as described for the PSA 100, the PSA 405 provides E_{LO,X} and E_{LO,Y}, which have the same TE polarization and the same power. E_{LO,X} is a LO optical signal for an X polarization component, and E_{LO,Y} is a LO optical signal for a Y polarization component. The receiver 440 receives a modulated optical signal E_{S} from a signal source, which likewise may be relatively far away from the system 400 in a transmitter. The PBS 430 splits E_{S} into a E_{S,X}, which has a TE polarization, and E_{S,Y}, which has a TM polarization. The PR 435 rotates the polarization of E_{S,Y} to a TE polarization. The 90° hybrid mixer 445 introduces a 90° phase shift between E_{S,X} and E_{S,Y}, which the PDs 450 detect, the TIAs 455 amplify, and the DSP 460 converts from analog to digital and then processes. Similarly, the 90° hybrid mixer 475 introduces a 90° phase shift between E_{LO,X} and E_{LO,Y}, which the PDs 470 detect, the TIAs 465 amplify, and the DSP 460 converts from analog to digital and then processes.

Self-homodyne detection (SHD) means that an LO optical signal and a modulated optical signal are at the same wavelength. For SHD, E_{S,X} is expressed as follows: ${E}_{S , X} = {E}_{sig , X} \left({t}_{s}\right) {e}^{\left[j\left({ωt}_{s}+{φ}_{sig}\left({t}_{s}\right)+φ\left({t}_{s}\right)\right)\right]}$ (7) where E_{sig,X} is a signal waveform, *tₛ* is a time in units of seconds, *ϕ_{sig}* is a phase encoded by data, and *ϕ* is phase noise. E_{LO,X} is expressed as follows: ${E}_{LO , X} = \frac{1}{\sqrt{2}} {E}_{LO , 0} \sqrt{1 - sin \left(-ωτ+Δϕ\right) sin 2 θ} {e}^{\left[j\left({ωt}_{lo}+φ\left({t}_{lo}\right)+{jΦ}_{1}\right)\right]}$ (8) where E_{LO,0} is an optical field amplitude of E_{LO} and *tₗₒ* is an LO time in units of seconds. For balanced detection, the output photocurrents that the PDs 450 provide for an in-phase (I) channel and a quadrature phase (Q) channel respectively are as follows: ${I}_{XI} = \frac{1}{\sqrt{2}} {E}_{sig , X} \left({t}_{s}\right) {E}_{LO , 0} \sqrt{1 - sin \left(-ωτ+Δϕ\right) sin 2 θ} cos \left({ΔΦ}_{XI}\right)$ (9) ${I}_{XQ} = \frac{1}{\sqrt{2}} {E}_{sig , X} \left({t}_{s}\right) {E}_{LO , 0} \sqrt{1 - sin \left(-ωτ+Δϕ\right) sin 2 θ} sin \left({ΔΦ}_{XQ}\right)$ (10) Δ*Φ_{XI}* and Δ*Φ_{XQ}*, in turn, are expressed as follows: $\begin{matrix}{ΔΦ}_{XI} = {ΔΦ}_{XQ} = ΔΦ \\ {ΔΦ}_{XI} = {ΔΦ}_{XQ} = {φ}_{sig} \left({t}_{s}\right) + ω \left({t}_{s}-{t}_{lo}\right) + φ \left({t}_{s}\right) - φ \left({t}_{lo}\right) + {Φ}_{1}\end{matrix}$ (11) When setting *-ωt* + Δ*φ* = *kπ*, equations (9)-(11) can be expressed respectively as follows: ${I}_{XI} = \frac{1}{\sqrt{2}} {E}_{sig , X} \left({t}_{s}\right) {E}_{LO , 0} cos \left({ΔΦ}_{XI}\right)$ (12) ${I}_{XQ} = \frac{1}{\sqrt{2}} {E}_{sig , X} \left({t}_{s}\right) {E}_{LO , 0} sin \left({ΔΦ}_{XQ}\right)$ (13) ${ΔΦ}_{XI} = {ΔΦ}_{XQ} = {φ}_{sig} \left({t}_{s}\right) + ω \left({t}_{s}-{t}_{lo}\right) + φ \left({t}_{s}\right) - φ \left({t}_{lo}\right) + θ$ (14) As shown, Δ*Φ* includes *ϕ_{sig}*(*tₛ*), the phase encoded by data; *ω*(*tₛ* - *tₗₒ*), a phase delay introduced by the carrier and a time delay between the signal and the LO; *ϕ*(*tₛ*), the phase difference due to phase noise; and *θ*, the phase due to the polarization orientation of the LO. *θ* becomes part of the total extracted phase difference. Except for a data-modulated phase term, other phase contributions vary relatively slowly, so they can be tracked and compensated for by the DSP 460. The X polarization components I_{XI} and I_{XQ} are described above, but the same equations apply for the Y polarization components I_{YI} and I_{YQ}.

The system 400 is a single-wavelength, dual-polarization, coherent optical receiver system. However, the scheme may be extended to multiple-wavelength systems. In that case, a wavelength-division multiplexing (WDM) multiplexer is placed before the system 400, the WDM multiplexer outputs *M* wavelengths, and *M* PSAs are placed after the WDM multiplexer so that each wavelength is associated with a separate PSA. Alternatively, two multiplexers are placed after the PSA 405. One multiplexer is for an X polarization component, and one multiplexer is for a Y polarization component. The two multiplexers then output *M* wavelengths.

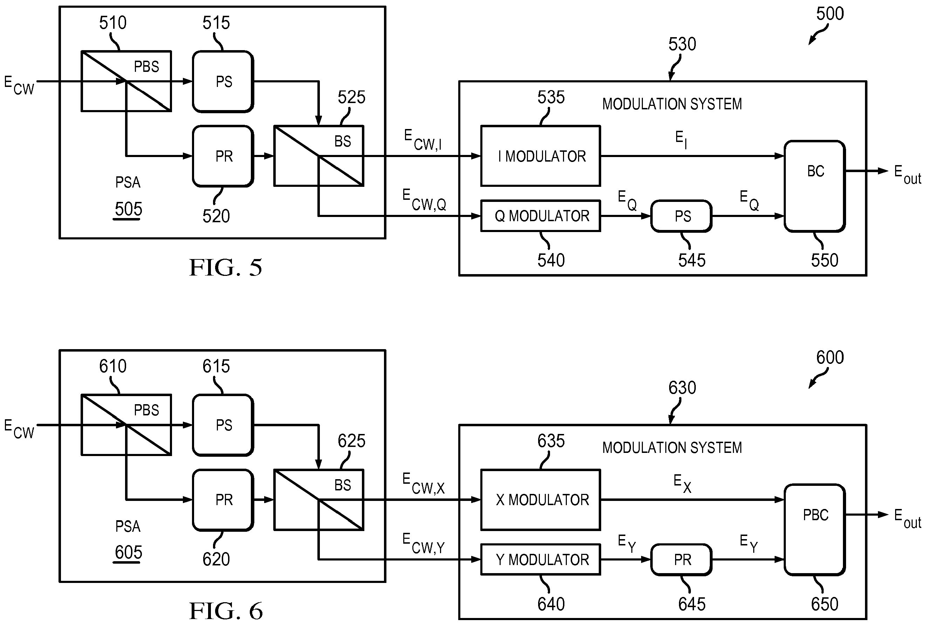

FIG. 5 is a schematic diagram of an IQ transmitter system 500 according to an embodiment of the disclosure. The system 500 generally comprises a PSA 505, which is similar to the PSA 100, and a modulator system 530. Thus, the system 500 provides an implementation of the PSA 100. The PSA 505 and the modulator system 530 may be integrated on a silicon substrate.

The PSA 505 comprises a PBS 510, a PS 515, a PR 520, and a BS 525 that are similar to the PBS 120, the PS 130, the PR 140, and the BS 150, respectively, in the PSA 100. The modulator system 530 comprises an I modulator 535, a Q modulator 540, a PS 545, and a beam combiner (BC) 550. The I modulator 535 and the Q modulator 535 may be Mach-Zehnder modulators (MZMs).

In operation, the PSA 505 receives E_{CW} from a CW source, which may be relatively far away from the system 500. If the CW source is coupled to the system 500 via a SSMF, then the polarization of E_{CW} may vary with time. Nonetheless, as described for the PSAs 100, 405, the PSA 505 provides E_{CW,I} and E_{CW,Q}, which have the same TE polarization and the same power. The TE polarization corresponds to the polarization orientation of the I modulator 535 and the Q modulator 540. The I modulator 535 modulates E_{CW,I} with data to produce E_{I}, then passes E_{I} to the BC 550. The Q modulator 540 modulates E_{CW,Q} with data to produce E_{Q}, then passes E_{Q} to the PS 545. The PS 545 adds a phase change to E_{Q} to create a 90° phase difference between E_{I} and E_{Q}. Finally, the BC 550 combines E_{I} and E_{Q} into a single light Eₒᵤₜ, then outputs Eₒᵤₜ.

FIG. 6 is a schematic diagram of a dual-polarization transmitter system 600 according to an embodiment of the disclosure. The system 600 generally comprises a PSA 605, which is similar to the PSA 100, and a modulator system 630. Thus, the system 600 provides an implementation of the PSA 100. The PSA 605 and the modulator system 630 may be integrated on a silicon substrate.

The PSA 605 comprises a PBS 610, a PS 615, a PR 620, and a BS 625 that are similar to the PBS 120, the PS 130, the PR 140, and the BS 150, respectively, in the PSA 100. The modulator system 630 comprises an X component (X) modulator 635, a Y component (Y) modulator 640, a PR 645, and a polarization beam combiner (PBC) 650. The X modulator 635 and the Y modulator 640 may be MZMs, electro-absorption (EA) modulators, or IQ modulators and may provide non-return-to-zero modulation, quadrature phase shift keying, 16-level quadrature amplitude modulator (16-QAM), or another suitable modulation format.

In operation, the PSA 605 receives E_{CW} from a CW source, which may be relatively far away from the system 600. If the CW source is coupled to the system 600 via an SSMF, then the polarization of E_{CW} may vary with time. Nonetheless, as described for the PSAs 100, 405, 505, the PSA 605 provides E_{CW,X} and E_{CW,Y}, which have the same TE polarization and the same power. The TE polarization corresponds to the polarization orientation of the X modulator 635 and the Y modulator 640. The X modulator 635 modulates E_{CW,X} with data to produce E_{X}, then passes E_{X} to the PBC 650. The Y modulator 640 modulates E_{CW,Y} with data to produce E_{Y}, then passes E_{Y} to the PR 645. The PR 645 rotates E_{Y} so that E_{Y} has a polarization orthogonal to E_{X}. Finally, the PBC 650 combines E_{X} and E_{Y} into a single light Eₒᵤₜ, then outputs Eₒᵤₜ.

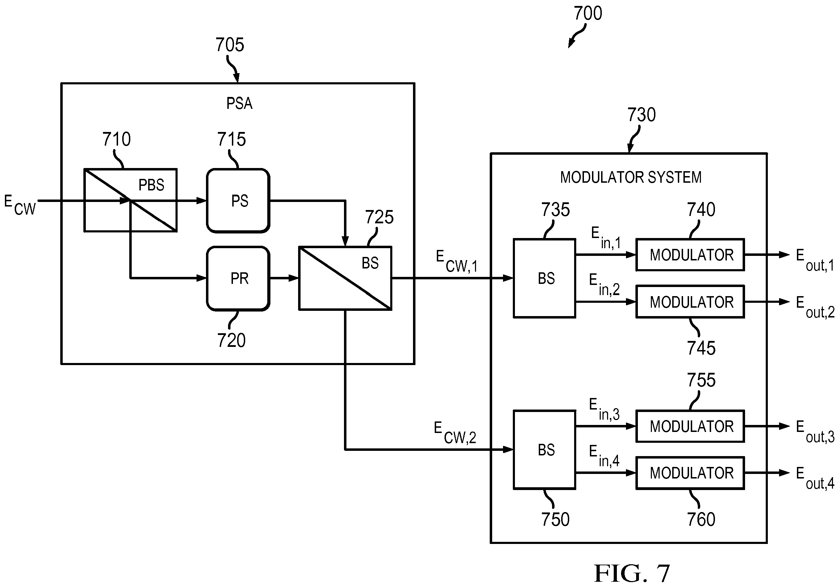

FIG. 7 is a schematic diagram of a PSM4 transmitter system 700 according to an embodiment of the disclosure. The system 700 generally comprises a PSA 705, which is similar to the PSA 100, and a modulator system 730. Thus, the system 700 provides an implementation of the PSA 100. The PSA 705 and the modulator system 730 may be integrated on a silicon substrate.

The PSA comprises a PBS 710, a PS 715, a PR 720, and a BS 725 that are similar to the PBS 120, the PS 130, the PR 140, and the BS 150, respectively, in the PSA 100. The modulator system 730 comprises a BS 735, a modulator 740, a modulator 745, a BS 750, a modulator 755, and a modulator 760. The modulators 740, 745, 755, 760 may be MZMs.

In operation, the PSA 705 receives E_{CW} from a CW source, which may be relatively far away from the system 700. If the CW source is coupled to the system 700 via an SSMF, then the polarization of E_{CW} may vary with time. Nonetheless, as described for the PSAs 100, 405, 505, 605, the PSA 705 provides E_{CW,1} and E_{CW,2}, which have the same TE polarization and the same power. The TE polarization corresponds to the polarization orientation of the modulators 740, 745, 755, 760. The BS 735 equally splits E_{CW,1} into E_{in,1} and E_{in,2}, and the BS 750 equally splits E_{CW,2} into E_{in,3} and E_{in,4}. Finally, the modulator 740 modulates E_{in,1} with data to produce E_{out,1}, then outputs E_{out,1}; the modulator 745 modulates E_{in,2} with data to produce E_{out,2}, then outputs E_{out,2}; the modulator 755 modulates E_{in,3} with data to produce E_{out,3}, then outputs E_{out,3}; and the modulator 760 modulates E_{in,4} with data to produce E_{out,4}, then outputs E_{out,4}. The modulators 740, 745, 755, 760 may output E_{out,1}, E_{out,2}, E_{out,3}, and E_{out,4}, respectively, to PSM4 fibers.

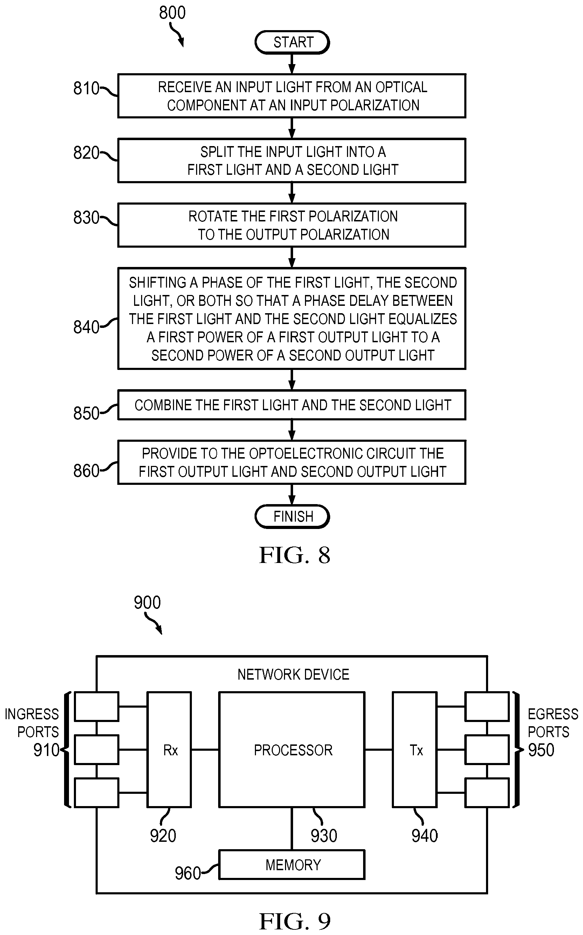

FIG. 8 is a flowchart illustrating a method 800 of polarization state alignment according to an embodiment of the disclosure. The PSAs 100, 300 or the systems 400, 500, 600, 700 may implement the method 800 at any suitable time, for instance upon desiring to provide LO optical signals or optical signals. At step 810, an input light is received from an optical component. The input light is at an input polarization. For instance, the PSA 100 receives Eᵢₙ from an SSMF, and Eᵢₙ comprises an arbitrary polarization. At step 820, the input light is split into a first light and a second light. The first light comprises an output polarization corresponding to an optoelectronic circuit, and the second light comprises a first polarization. For instance, the PBS 120 splits Eᵢₙ into E₁, which has a TE polarization, and E₂, which has a TM polarization. At step 830, the first polarization is rotated to the output polarization. For instance, the PR 140 rotates the polarization of E₂ so that E₂ has a TE polarization. At step 840, a phase of the first light, the second light, or both is shifted so that a phase delay between the first light and the second light equalizes a first power of a first output light to a second power of a second output light. For instance, the PS 130 shifts the phase of E₁ so that the phase delay between the phase of E₁ and the phase of E₂ is an integer multiple of π so that P_{out,1} and P_{out,2} are equal. Finally, at step 850, the first output light and the second output light are provided to the optoelectronic circuit. The first output light and the second output light comprise the output polarization. For instance, the PSA 100 provides E_{out,1} and E_{out,2} to a modulator system or a receiver, and E_{out,1} and E_{out,2} comprise the TE polarization.

FIG. 9 is a schematic diagram of a device 900. The device 900 is suitable for implementing the disclosed embodiments. For instance, as described above, the device 900 performs calculations to determine an appropriate phase shift and instructs a PS such as the PSs 130, 340, 415, 515, 615, 715 to apply that phase shift. The device 900 comprises ingress ports 910 and receiver units (Rx) 920 for receiving data; a processor, logic unit, or central processing unit (CPU) 930 to process the data; transmitter units (Tx) 940 and egress ports 950 for transmitting the data; and a memory 960 for storing the data. The device 900 may also comprise optical-to-electrical (OE) components and electrical-to-optical (EO) components coupled to the ingress ports 910, the receiver units 920, the transmitter units 940, and the egress ports 950 for egress or ingress of optical or electrical signals.

The processor 930 is implemented by any suitable combination of hardware, middleware, and software. The processor 930 may be implemented as one or more CPU chips, cores (e.g., as a multi-core processor), field-programmable gate arrays (FPGAs), application specific integrated circuits (ASICs), and digital signal processors (DSPs). The processor 930 is in communication with the ingress ports 910, receiver units 920, transmitter units 940, egress ports 950, and memory 960.

The memory 960 comprises one or more disks, tape drives, and solid-state drives and may be used as an over-flow data storage device, to store programs when such programs are selected for execution, and to store instructions and data that are read during program execution. The memory 960 may be volatile and non-volatile and may be read-only memory (ROM), random-access memory (RAM), ternary content-addressable memory (TCAM), and static random-access memory (SRAM).

In an example embodiment, the device 900 includes a light input module receiving an input light from an optical component at an input polarization, a splitter module splitting the input light into a first light and a second light, wherein the first light comprises an output polarization corresponding to an optoelectronic circuit, and wherein the second light comprises a first polarization, a rotation module rotating the first polarization to the output polarization, a phase shift module shifting a phase of the first light, the second light, or both so that a phase delay between the first light and the second light equalizes a first power of a first output light to a second power of a second output light, a combiner module combining the first light and the second light, and a light output module providing to the optoelectronic circuit the first output light and the second output light, wherein the first output light is associated with the first light and the second output light is associated with the second light, wherein the first output light and the second output light comprise the output polarization. In some embodiments, the device 900 may include other or additional modules for performing any one of or combination of steps described in the embodiments.

The use of the term "about" means a range including ±10% of the subsequent number, unless otherwise stated. While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A system comprising:
a polarization state aligner, PSA, (405) comprising:
an input port (110);
a first polarization beam splitter, PBS, (410) coupled to the input port;
a first phase shifter, PS, (415) coupled to the first output of the first PBS (410);
a first polarization rotator, PR, (420) coupled to the second output of the first PBS (410);
a first beam splitter, BS, (425) coupled to the first PS (415) and the first PR (420);
a first output port coupled to the first BS (425); and **characterized by**
a second output port coupled to the first BS (425),
a receiver (440) coupled to the PSA and comprising:
a second PBS (430);
a first 90 ° hybrid mixer (445) coupled to the first output of the second PBS (430) and the first output port of the first BS (425);
first photodiodes, PDs, (450) coupled to the first 90° hybrid mixer (445);
first transimpedance amplifiers, TIAs, (455) coupled to the first PDs (450); and
a digital signal processor, DSP, (460) coupled to the first TIAs (455),
wherein the receiver (440) further comprises:
a second PR (435) coupled to the second output of the second PBS (430);
a second 90° hybrid mixer (475) coupled to the second PR (435) and the second output port of the first BS (425);
second PDs (470) coupled to the second 90° hybrid mixer (475); and
second TIAs (465) coupled to the second PDs (470) and the DSP (460).

2. The system of any of claim 1, further comprising a waveguide medium coupling the first PBS (410) to the input port, the first PS (415) to the first PBS (410), the first PR (420) to the first PBS (410), the first BS (425) to the first PS (415) and the first PR (420), the first output port to the first BS (425), and the second output port to the first BS (425).

3. The system of claim 1, wherein:
the PSA is configured to:
receive an input light from an optical component at an input polarization;
split the input light into a first light and a second light, wherein the first light comprises an output polarization corresponding to an optoelectronic circuit, and wherein the second light comprises a first polarization;
rotate the first polarization to the output polarization;
combine the first light and the second light; and
provide to the optoelectronic circuit a first output light associated with the first light and a second output light associated with the second light;
wherein the first output light and the second output light comprise the output polarization.

4. The system of claim 3, wherein the input polarization is any arbitrary polarization, the output polarization is a transverse electric, TE, polarization, and the first polarization is a transverse magnetic, TM, polarization.

5. The system of any of claims 3 to 4, wherein
the firstPBS (410) is configured to:
receive the input light; and
split the input light into the first light and the second light;
the first (PR (420) is coupled to the first PBS (410) and configured to rotate the first polarization to the output polarization; and
the first PS (415) is coupled to the first PBS (410) and configured to shift a first phase of the first light to a second phase so that a phase delay between the first light and the second light is an integer multiple of π.

6. The system of any of claims 3 to 4, wherein the PSA comprises:
a polarization splitter-rotator (PSR) (330) configured to:
receive the input light;
split the input light into the first light and the second light; and
rotate the first polarization to the output polarization; and
the PS, (340) coupled to the PSR (330) and configured to shift a first phase of the second light to a second phase so that a phase delay between the first light and the second light is an integer multiple of π.

7. A method comprising:
receiving an input light from an optical component at an input polarization; polarization splitting the input light into a first light and a second light, wherein the first light comprises an output polarization suitable for a coherent receiver, and wherein the second light comprises a first polarization;
rotating the first polarization to the output polarization;
shifting a phase of the first light, the second light, or both so that a phase delay between the first light and the second light equalizes a first power of a first output light to a second power of a second output light;
combining the first light and the second light and splitting them into a first output light and a second output light; and
providing to the coherent receiver the first output light and the second output light,
wherein the first output light and the second output light comprise the output polarization,
**characterized in that** the method further comprises:
providing to the coherent receiver the first output light as a first local oscillator, LO, optical signal; and
providing to the coherent receiver the second output light as a second LO optical signal.

## Patentansprüche

1. System, umfassend:
einen Polarisationsstatusausrichter, PSA, (405) umfassend:
einen Eingangsport (110);
einen ersten an den Eingangsport gekoppelten Polarisationsstrahlteiler, PBS, (410);
einen ersten an den ersten Ausgang des ersten PBS (410) gekoppelten Phasenschieber, PS, (415);
einen ersten an den zweiten Ausgang des ersten PBS (410) gekoppelten Polarisationsrotator, PR, (420);
einen ersten an den ersten PS (415) und den ersten PR (420) gekoppelten Strahlteiler, BS, (425);
einen ersten mit dem ersten BS (425) gekoppelten Ausgangsport; und **gekennzeichnet durch** einen zweiten mit dem ersten BS (425) gekoppelten Ausgangsport,
einen mit dem PSA gekoppelten Empfänger (440), und umfassend:
einen zweiten PBS (430);
einen ersten mit dem ersten Ausgang des zweiten PBS (430) und dem ersten Ausgangsport des ersten BS (425) gekoppelten 90°-Hybridmischer (445);
erste mit dem ersten 90°-Hybridmischer (445) gekoppelte Photodioden, PDs, (450);
erste mit den ersten PDs (450) gekoppelte Transimpedanzverstärker, TIAs, (455); und
einen mit den ersten TIAs (455) gekoppelten digitalen Signalprozessor, DSP, (460),
wobei der Empfänger (440) ferner umfasst:
einen zweiten mit dem zweiten Ausgang des zweiten PBS (430) gekoppelten PR (435);
einen zweiten mit dem zweiten PR (435) und dem zweiten Ausgangsport des ersten BS (425) gekoppelten 90°-Hybridmischer (475);
zweite mit dem zweiten 90°-Hybridmischer (475) gekoppelte PDs (470); und
zweite mit den zweiten PDs (470) und dem DSP (460) gekoppelte TIAs (465).

2. System nach einem der Ansprüche 1, ferner umfassend ein Wellenleitermedium, das den ersten PBS (410) mit dem Eingangsport, den ersten PS (415) mit dem ersten PBS (410), den ersten PR (420) mit dem ersten PBS (410), den ersten BS (425) mit dem ersten PS (415) und dem ersten PR (420), den ersten Ausgangsport mit dem ersten BS (425) und den zweiten Ausgangsport mit dem ersten BS (425) koppelt.

3. System nach Anspruch 1, wobei:
der PSA dazu konfiguriert ist:
ein Eingangslicht von einer optischen Komponente mit einer Eingangspolarisation zu empfangen;
das Eingangslicht in ein erstes Licht und ein zweites Licht zu teilen, wobei das erste Licht eine Ausgangspolarisation umfasst, die einer optoelektronischen Schaltung entspricht, und wobei das zweite Licht eine erste Polarisation umfasst;
die erste Polarisation auf die Ausgangspolarisation zu drehen;
das erste Licht und das zweite Licht zu kombinieren; und
der optoelektronischen Schaltung ein erstes Ausgangslicht, das dem ersten Licht zugeordnet ist, und ein zweites Ausgangslicht, das dem zweiten Licht zugeordnet ist, bereitzustellen;
wobei das erste Ausgangslicht und das zweite Ausgangslicht die Ausgangspolarisation umfassen.

4. System nach Anspruch 3, wobei die Eingangspolarisation eine beliebige Polarisation ist, die Ausgangspolarisation eine transversalelektrische-TE-Polarisation ist und die erste Polarisation eine transversalmagnetische-TM-Polarisation ist.

5. System nach einem der Ansprüche 3 bis 4 wobei
der erste PBS (410) dazu konfiguriert ist:
das Eingangslicht zu empfangen; und
das Eingangslicht in das erste Licht und das zweite Licht zu teilen;
der erste PR (420) mit dem ersten PBS (410) gekoppelt und dazu konfiguriert ist, die erste Polarisation auf die Ausgangspolarisation zu drehen; und
der erste PS (415) mit dem ersten PBS (410) gekoppelt und dazu konfiguriert ist, eine erste Phase des ersten Lichts in eine zweite Phase zu verschieben, so dass eine Phasenverzögerung zwischen dem ersten Licht und dem zweiten Licht ein ganzzahliges Vielfaches von π ist.

6. System nach einem der Ansprüche 3 bis 4, wobei der PSA umfasst:
einen Polarisationsteiler-Rotator (PSR) (330), der dazu konfiguriert ist:
das Eingangslicht zu empfangen;
das Eingangslicht in das erste Licht und das zweite Licht zu teilen; und
die erste Polarisation auf die Ausgangspolarisation zu drehen; und
den PS, (340), der mit dem PSR (330) gekoppelt und dazu konfiguriert ist, eine erste Phase des zweiten Lichts in eine zweite Phase zu verschieben, so dass eine Phasenverzögerung zwischen dem ersten Licht und dem zweiten Licht ein ganzzahliges Vielfaches von π ist.

7. Verfahren, umfassend:
Empfangen eines Eingangslichts von einer optischen Komponente mit einer Eingangspolarisation;
Polarisationsteilen des Eingangslichts in ein erstes Licht und ein zweites Licht, wobei das erste Licht eine Ausgangspolarisation umfasst, die für einen kohärenten Empfänger geeignet ist, und wobei das zweite Licht eine erste Polarisation umfasst;
Drehen der ersten Polarisation auf die Ausgangspolarisation;
Verschieben einer Phase des ersten Lichts, des zweiten Lichts oder beider, so dass eine Phasenverzögerung zwischen dem ersten Licht und dem zweiten Licht eine erste Leistung eines ersten Ausgangslichts an eine zweite Leistung eines zweiten Ausgangslichts angleicht;
Kombinieren des ersten Lichts und des zweiten Lichts und Teilen derselben in ein erstes Ausgangslicht und ein zweites Ausgangslicht; und
Bereitstellen des ersten Ausgangslichts und des zweiten Ausgangslichts für den kohärenten Empfänger,
wobei das erste Ausgangslicht und das zweite Ausgangslicht die Ausgangspolarisation umfassen, **dadurch gekennzeichnet, dass** das Verfahren ferner umfasst:
Bereitstellen des ersten Ausgangslichts für den kohärenten Empfänger als erstes optisches Signal eines lokalen Oszillators, LO, und
Bereitstellen des zweiten Ausgangslichts für den kohärenten Empfänger als zweites optisches LO-Signal.

## Revendications

1. Système comprenant :
un dispositif d'alignement d'état de polarisation, PSA, (405) comprenant :
un port d'entrée (110),
un premier séparateur de faisceau de polarisation, PBS, (410) couplé au port d'entrée,
un premier déphaseur, PS (415) couplé à la première sortie du premier séparateur PBS (410),
un premier rotateur de polarisation, PR, (420) couplé à la seconde sortie du premier séparateur PBS (410),
un premier séparateur de faisceau, BS, (425) couplé au premier déphaseur PS (415) et au premier rotateur PR (420),
un premier port de sortie couplé au premier séparateur BS (425), et **caractérisé par** :
un second port de sortie couplé au premier séparateur BS (425),
un récepteur (440) couplé au dispositif PSA et comprenant :
un second séparateur PBS (430),
un premier mélangeur hybride 90 ° (445) couplé à la première sortie du second séparateur PBS (430) et au premier port de sortie du premier séparateur BS (425),
des premières photodiodes, PD, (450) couplées au premier mélangeur hybride 90 ° (445),
des premiers amplificateurs d'adaptation d'impédance, TIA, (455) couplés aux premières diodes PD (450), et
un processeur numérique de signal, DSP, (460) couplé aux premiers amplificateurs TIA (455),
dans lequel le récepteur (440) comprend en outre :
un second rotateur PR (435) couplé à la seconde sortie du second séparateur PBS (430),
un second mélangeur hybride 90 ° (475) couplé au second rotateur PR (435) et au second port de sortie du premier séparateur BS (425),
des secondes diodes PD (470) couplées au second mélangeur hybride 90 ° (475), et
des seconds amplificateurs TIA (465) couplés aux secondes diodes PD (470) et au processeur DSP (460).

2. Système selon la revendication 1, comprenant en outre un milieu formant guide d'onde couplant le premier séparateur PBS (410) au port d'entrée, le premier déphaseur PS (415) au premier séparateur PBS (410), le premier rotateur PR (420) au premier séparateur PBS (410) le premier séparateur BS (425) au premier déphaseur PS (415) et au premier rotateur PR (420), le premier port de sortie au premier séparateur BS (425) et le second port de sortie au premier séparateur BS (425).

3. Système selon la revendication 1, dans lequel :
le dispositif PSA est configuré pour :
recevoir la lumière d'entrée émise par un composant optique au niveau d'une polarisation d'entrée,
séparer la lumière d'entrée en une première lumière et une seconde lumière, la première lumière comprenant une polarisation de sortie correspondant à un circuit optoélectronique, et la seconde lumière comprenant une première polarisation,
faire tourner la première polarisation pour obtenir la polarisation de sortie, combiner la première lumière et la seconde lumière, et
délivrer au circuit optoélectronique une première lumière de sortie associée à la première lumière et une seconde lumière de sortie associée à la seconde lumière,
dans lequel la première lumière de sortie et la seconde lumière de sortie comprennent la polarisation de sortie.

4. Système selon la revendication 3, dans lequel la polarisation d'entrée est une quelconque polarisation arbitraire, la polarisation de sortie est une polarisation électrique transverse, TE et la première polarisation est une polarisation magnétique transverse, TM.

5. Système selon l'une quelconque des revendications 3 à 4, dans lequel :
le premier séparateur PBS (410) est configuré pour :
recevoir la lumière d'entrée, et
séparer la lumière d'entrée en la première lumière et la seconde lumière,
le premier rotateur PR (420) est couplé au premier séparateur PBS (410) et configuré pour faire tourner la première polarisation pour obtenir la polarisation de sortie, et
le premier déphaseur PS (415) est couplé au premier séparateur PBS (410) et configuré pour décaler une première phase de la première lumière en une seconde phase de sorte que le retard de phase entre la première lumière et la seconde lumière soit un multiple entier de π.

6. Système selon l'une quelconque des revendications 3 à 4, dans lequel le dispositif PSA comprend :
un séparateur - rotateur de polarisation (PSR) (330) configuré pour :
recevoir la lumière d'entrée,
séparer la lumière d'entrée en la première lumière et la seconde lumière, et
faire tourner la première polarisation pour obtenir la polarisation de sortie, et
le séparateur PS (340), couplé au séparateur PSR (330) et configuré pour décaler une première phase de la seconde lumière en une seconde phase de sorte que le retard de phase entre la première lumière et la seconde lumière soit un multiple entier de π.

7. Procédé comprenant :
la réception d'une lumière d'entrée émise par un composant optique avec une polarisation d'entrée,
la séparation par polarisation de la lumière d'entrée en une première lumière et en une seconde lumière, la première lumière comprenant une polarisation de sortie qui convient à un récepteur cohérent et la seconde lumière comprenant une première polarisation,
la rotation de la première polarisation pour obtenir la polarisation de sortie,
le décalage de phase de la première lumière, de la seconde lumière ou des deux de sorte que le retard de phase entre la première lumière et la seconde lumière égalise la première puissance d'une première lumière de sortie à la seconde puissance de lumière de sortie,
la combinaison de la première lumière et de la seconde lumière et leur séparation en une première lumière de sortie et une seconde lumière de sortie, et
la délivrance au récepteur cohérent de la première lumière de sortie et de la seconde lumière de sortie,
dans lequel la première lumière de sortie et la seconde lumière de sortie comprennent la polarisation de sortie,
**caractérisé en ce que** le procédé comprend en outre :
la délivrance au récepteur cohérent de la première lumière de sortie sous forme d'un premier signal optique d'oscillateur local, LO, et
la délivrance au récepteur cohérent de la seconde lumière de sortie sous forme d'un second signal optique d'oscillateur LO.
